# EUROPEAN PATENT SPECIFICATION

(11) **EP 3 886 389 B1**
(45) Date of publication and mention of the grant of the patent: **17.06.2026**
(21) Application number: 20165468.8
(22) Date of filing: 25.03.2020
(51) Int. Cl.: H04W 12/50, H04W 12/63, H04L 9/40, G01S 13/76, G01S 13/02

(54) **COMMUNICATION DEVICE AND OPERATING METHOD USING UWB AND BLUETOOTH**
KOMMUNIKATIONSVORRICHTUNG UND BETRIEBSVERFAHREN UNTER VERWENDUNG UWB UND BLUETOOTH
DISPOSITIF DE COMMUNICATION ET PROCÉDÉ DE FONCTIONNEMENT UTILISANT UWB ET BLUETOOTH

(43) Date of publication of application: 29.09.2021
(73) Proprietor: NXP B.V., 5656 AG Eindhoven (NL)
(72) Inventor: LEMSITZER, Stefan, 5656 AG Eindhoven (NL)
(74) Representative: Krott, Michel

(56) References cited:
- US-A1- 2006 085 848
- US-A1- 2019 116 619
- US-A1- 2020 062 217

## Description

### TECHNICAL FIELD

The present disclosure relates to a communication device. Furthermore, the present disclosure relates to a corresponding method of operating a communication device.

### BACKGROUND

Ultra-wideband (UWB) is a technology that uses a high signal bandwidth, in particular for transmitting digital data over a wide spectrum of frequency bands with very low power. For example, ultra-wide band technology may use the frequency spectrum of 3.1 to 10.6 GHz and may feature a high-frequency bandwidth of more than 500 MHz and very short pulse signals, resulting in high data rates. The UWB technology enables a high data throughput for communication devices and a high precision for the localization of devices.

US 2020/062217 A1 describes that two different wireless protocols can be used for ranging between a mobile device and an access control system (e.g., a vehicle). The first wireless protocol (e.g., Bluetooth) can be used to perform authentication of the vehicle and exchange ranging capabilities between a mobile device (e.g., a phone or watch) and the vehicle. The second wireless protocol (e.g., ultra-wideband, UWB) can use a pulse width that is less than a pulse width used by the first wireless protocol (e.g., 1 ns v. 1 µs). The narrower pulse width can provide greater accuracy for distance (ranging) measurements.

### SUMMARY

In accordance with a first aspect of the present disclosure, a communication device is provided, as defined in claim 1.

In one or more embodiments, the processing unit is further configured to perform a UWB ranging session key agreement process with the external communication device through the secure communication channel.

In one or more embodiments, the further communication unit is a Bluetooth low energy (BLE) communication unit or a Wi-Fi communication unit.

In one or more embodiments, carrying out the transaction includes performing a mutual authentication process with the external communication device.

In one or more embodiments, the mutual authentication process uses a predetermined cryptographic key.

In one or more embodiments, the predetermined cryptographic key is an advanced encryption standard (AES) master key that has been shared with the external communication device before the mutual authentication process is performed.

In one or more embodiments, carrying out the transaction includes concluding the transaction only if the result of the UWB ranging session meets an expected result.

In accordance with a second aspect of the present disclosure, a method of operating a communication device is conceived, as defined in claim 8.

In one or more embodiments, the processing unit further performs a UWB ranging session key agreement process with the external communication device through the secure communication channel.

In one or more embodiments, carrying out the transaction includes performing a mutual authentication process with the external communication device.

In accordance with a third aspect of the present disclosure, a computer program is provided, comprising executable instructions which, when executed by a communication device, carry out a method of the kind set forth.

### DESCRIPTION OF DRAWINGS

Embodiments will be described in more detail with reference to the appended drawings, in which:
Fig. 1 shows an illustrative embodiment of a communication device;
Fig. 2 shows an illustrative embodiment of a method of operating a communication device;
Fig. 3 shows an illustrative embodiment of a communication system.

### DESCRIPTION OF EMBODIMENTS

Ultra-wideband (UWB) is a technology that uses a high signal bandwidth, in particular for transmitting digital data over a wide spectrum of frequency bands with very low power. For example, ultra-wide band technology may use the frequency spectrum of 3.1 to 10.6 GHz and may feature a high-frequency bandwidth of more than 500 MHz and very short pulse signals, resulting in high data rates. The UWB technology enables a high data throughput for communication devices and a high precision for the localization of devices.

UWB technology may also be used for supporting applications which are typically performed by technologies such as near field communication (NFC), for example for supporting the execution of transactions with another communication device (e.g., a payment terminal). Examples of such transactions include payment transactions in a variety of stores and ticket validations or fare payments in the public transportation sector. Such a transaction usually comprises an exchange of one or more commands (e.g., instructions) and responses (e.g., data) between two communication devices. In such a scenario, a UWB communication device facilitates the localization of the communication counterparts if a communication technology such as Bluetooth low energy or Wi-Fi is used for executing a transaction between the communication counterparts. These communication technologies have a larger range than NFC, and therefore the localization of the communication counterparts becomes important. In particular, when NFC is used for carrying out a transaction, the intent of a user is implicitly given because NFC can only be realized while the communication counterparts are in close proximity of each other. However, the intent of a user may not be clear if a larger-range communication technology is used. For example, a user may be within communication range of a payment terminal, such that a transaction might be initiated between his mobile phone and the terminal, but instead of approaching the terminal, the user leaves the store. **In** this case, the transaction might be executed while this was not intended. Thus, the system may not be sufficiently reliable and secure. **In** such a case, UWB may be used to track the movement of the user, and if this movement implies the intention of the user to carry out the transaction (e.g., if the phone approaches the terminal in the expected manner) then the transaction may be concluded. Thus, an UWB ranging session involving a plurality of ranging operations to track the phone's movements is used as a complementary security feature, to compensate for the loss of security inherently caused by the larger-range technologies.

Thus, a UWB communication device integrated in a mobile phone may perform a sequence of ranging operations with another UWB communication device integrated in a payment terminal or a transit gate, to increase the reliability and security of a transaction (e.g., to verify whether the phone is carried by a user that approaches the terminal or the gate). The transaction, which is executed through an out-of-band communication channel (i.e., not through the UWB communication channel), may involve initial steps such as the identification, authentication and verification of access rights of the phone, and concluding steps such as the completion of the transaction and the confirmation by the terminal that the transaction has been concluded. The UWB ranging session is used to verify whether the phone approaches the terminal, which implies that the user has the intention to carry out the transaction. In typical NFC use cases, this intent is implicitly given by the technology, because the user needs to be in close proximity (10 cm) of the terminal. Using BLE, the transaction is typically initiated while the user is many meters away from the terminal. Therefore, a UWB ranging session is executed to verify whether the user correctly approaches the terminal, and the transaction is concluded in dependence on the result of the UWB ranging session.

In these scenarios, a UWB communication session should be bound to the transaction to be executed. In order to achieve this, transaction-related credentials are typically used to derive UWB communication session keys. An example of such a transaction-related credential is a predetermined advanced encryption standard (AES) master key, which has been shared between the communication counterparts for use in a mutual authentication process. It is noted that a UWB communication session refers to a grouping of several secure UWB ranging operations which belong to a single entity (e.g., a mobile phone). Thus, several ranging operations are performed during a session, and the data exchanged between the two devices during said ranging operations are protected by means of encryption using a UWB communication session key. In order to achieve the binding of the UWB communication session to the transaction, the transaction should typically be modified. For example, command set definitions and implementations will have to be changed, to add a UWB ranging key derivation process to the transaction. Since there are many service providers implementing various types of transactions, this change may be cumbersome. Furthermore, the transactions are often deeply embedded in reader devices and backend systems of infrastructure providers. Thus, the modification of the transactions may require costly changes of the infrastructure as well.

Now discussed are a communication device and a corresponding method of operating a communication device, which facilitate the binding of the UWB communication session to a transaction to be executed.

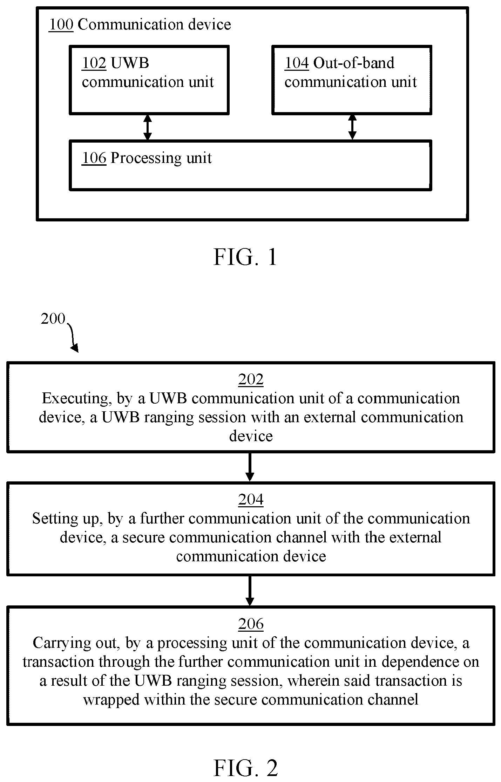

**Fig. 1** shows an illustrative embodiment of a communication device 100. The communication device 100 includes a UWB communication unit 102, an out-of-band communication unit 104 and a processing unit 106. It is noted that the term "out-of-band communication unit" refers to an additional communication unit, which is configured to set up a secure communication channel with an external communication device (not shown), i.e. in addition to a UWB communication channel which is set up by the UWB communication unit 102. Furthermore, the UWB communication unit 102 is configured to execute a UWB ranging session with the external communication device. Furthermore, the processing unit 106 is configured to carry out a transaction through the out-of-band communication unit 104 in dependence on a result of the UWB ranging session. Finally, the processing unit 106 is configured to wrap the transaction within the secure communication channel. This facilitates binding the UWB communication session to the transaction without modifying the transaction.

In one or more embodiments, the processing unit is further configured to perform a UWB ranging session key agreement process with the external communication device through the secure communication channel. Thus, the secure communication channel may also conveniently be used for supporting the UWB ranging session key agreement process. Furthermore, in a practical implementation, the further communication unit is a Bluetooth low energy (BLE) communication unit or a Wi-Fi communication unit. In one or more embodiments, the processing unit is configured to wrap the transaction within the secure communication channel by embedding a command and response of said transaction within the secure communication channel. This results in a practical implementation, in which the transaction is efficiently wrapped within the secure communication channel.

The transaction includes a command and a response, which are wrapped in the following manner. A command of said transaction is encrypted and integrity protection data is added, and subsequently the encrypted command is sent through the secure communication channel. Then, the receiver verifies the integrity protection data and decrypts the command, prepares a response, encrypts the response, adds integrity protection data to the encrypted response and sends the encrypted response through the secure communication channel. Subsequently, the sender receives the encrypted response, verifies the integrity protection data and decrypts the response. It is noted that in a practical implementation the integrity protection data may be formed by a signature or a message authentication code, such as a cipher-based message authentication code (CMAC).

In one or more embodiments, executing the UWB ranging session includes executing a plurality of ranging operations with the external communication device. In this way, the security of the transaction may be increased, in the sense that it can be verified whether the communication device is carried by a user who for example correctly approaches the external communication device (i.e., in an expected manner). Thus, the intention of the user can be derived from the movement of the communication device. In a practical implementation, carrying out the transaction includes concluding the transaction only if the result of the UWB ranging session meets an expected result.

Furthermore, in one or more embodiments, carrying out the transaction includes performing a mutual authentication process with the external communication device. In this way, the security of the transaction may be further increased, in the sense that the authenticity of the communication counterparts can be verified. In a practical implementation, the mutual authentication process uses a predetermined cryptographic key, in particular an advanced encryption standard (AES) master key that has been shared with the external communication device before the mutual authentication process is performed. This may result in an efficient and reliable authentication process. Alternatively, the secure communication channel may be established based on an asymmetric key agreement including a certificate chain verification.

**Fig. 2** shows an illustrative embodiment of a method 200 of operating a communication device. The method 200 comprises the following steps. At 202, a UWB communication unit of the communication device executes a UWB ranging session with an external communication device. At 204, a further communication unit of the communication device sets up a secure communication channel with the external communication device. Furthermore, at 206, a processing unit of the communication device carries out a transaction through the further communication unit in dependence on a result of the UWB ranging session, wherein said transaction is wrapped within the secure communication channel. This facilitates binding the UWB communication session to the transaction without modifying the transaction.

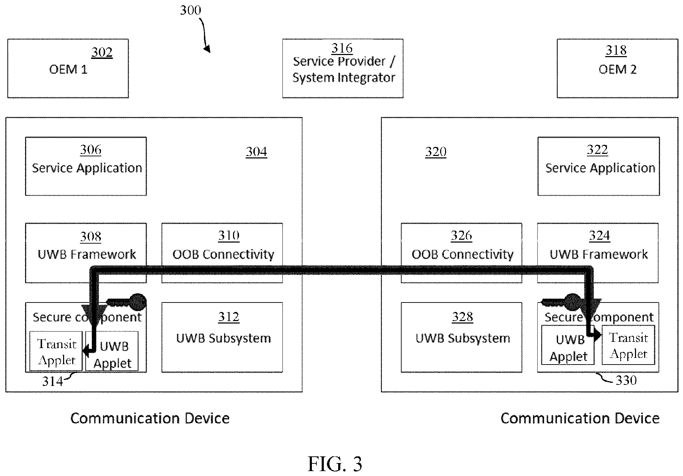

**Fig. 3** shows an illustrative embodiment of a communication system 300. In particular, an example is shown of a system 300 in which a communication device 304, 320 of the kind set forth is used to carry out a transaction. A first original equipment manufacturer (OEM) 302 provides a first communication device 304 and a second OEM 318 provides a second communication device 320. The first communication device 304 comprises a service application 306, a UWB framework component 308, an out-of-band connectivity unit 310, a UWB subsystem 312 (i.e., a UWB communication unit) and a secure component 314 (e.g., a secure element). Similarly, the second communication device 320 comprises a service application 322, a UWB framework component 324, an out-of-band connectivity unit 326, a UWB subsystem 328 (i.e., a UWB communication unit) and a secure component 330 (e.g., a secure element). It is noted that a secure element may for example be an embedded chip, more specifically a tamper-resistant integrated circuit with installed or pre-installed smart-card-grade applications, for instance payment applications, which have a prescribed functionality and a prescribed level of security. Furthermore, a secure element may implement security functions, such as cryptographic functions and authentication functions. The secure components 314, 330 may execute a UWB applet and an applet which supports or carries out the transaction (i.e., a transit application in the present example, or an access application in another example). In accordance with the present disclosure, the transaction is wrapped within a secure communication channel which is set up between the two communication devices 304, 320 through the respective out-of-band connectivity units 310, 326.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, a state machine, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: communication device
- 102: UWB communication unit
- 104: out-of-band communication unit
- 106: processing unit
- 200: method of operating a communication device
- 202: executing, by a UWB communication of a communication device, a UWB ranging session with an external communication device
- 204: setting up, by a further communication unit of the communication device, a secure communication channel with the external communication device
- 206: carrying out, by a processing unit of the communication device, a transaction through the further communication unit in dependence on a result of the UWB ranging session, wherein said transaction is wrapped within the secure communication channel
- 300: communication system
- 302: first original equipment manufacturer
- 304: communication device
- 306: service application
- 308: UWB framework
- 310: out-of-band connectivity
- 312: UWB subsystem
- 314: secure component
- 316: service provider/system integrator
- 318: second original equipment manufacturer
- 320: communication device
- 322: service application
- 324: UWB framework
- 326: out-of-band connectivity
- 328: UWB subsystem
- 330: secure component

## Claims

1. A communication device (100), comprising:
an ultra-wideband, UWB, communication unit (102) configured to execute a UWB ranging session with an external communication device, wherein executing the UWB ranging session includes executing a plurality of ranging operations with the external communication device;
a further communication unit (104) configured to set up a secure communication channel with the external communication device;
a processing unit (106) configured to carry out a transaction through the further communication unit in dependence on a result of the UWB ranging session, wherein executing the UWB ranging session includes executing a plurality of ranging operations with the external communication device to verify whether the communication device is carried by a user who correctly approaches the external communication device;
wherein the processing unit (106) is further configured to wrap said transaction within the secure communication channel by embedding a command and response of said transaction within the secure communication channel;
wherein the communication device (100) is configured to use transaction-related credentials to derive UWB communication session keys, wherein data exchanged between the communication device (100) and the external communication device during the ranging operations are protected by means of encryption using a UWB communication session key.

2. The device (100) of claim 1, wherein the processing unit (106) is further configured to perform a UWB ranging session key agreement process with the external communication device through the secure communication channel.

3. The device (100) of any preceding claim, wherein the further communication unit (104) is a Bluetooth low energy, BLE, communication unit or a Wi-Fi communication unit.

4. The device (100) of any preceding claim, wherein carrying out the transaction includes performing a mutual authentication process with the external communication device.

5. The device (100) of claim 4, wherein the mutual authentication process uses a predetermined cryptographic key.

6. The device (100) of claim 5, wherein the predetermined cryptographic key is an advanced encryption standard, AES, master key that has been shared with the external communication device before the mutual authentication process is performed.

7. The device (100) of any preceding claim, wherein carrying out the transaction includes concluding the transaction only if the result of the UWB ranging session meets an expected result.

8. A method (200) of operating a communication device, comprising:
executing (202), by an ultra-wideband, UWB, communication unit of the communication device, a UWB ranging session with an external communication device, wherein executing the UWB ranging session includes executing a plurality of ranging operations with the external communication device;
setting up (204), by a further communication unit of the communication device, a secure communication channel with the external communication device;
carrying out (206), by a processing unit of the communication device, a transaction through the further communication unit in dependence on a result of the UWB ranging session, wherein executing the UWB ranging session includes executing a plurality of ranging operations with the external communication device to verify whether the communication device is carried by a user who correctly approaches the external communication device;
wherein said transaction is wrapped within the secure communication channel by embedding a command and response of said transaction within the secure communication channel;
wherein the communication device (100) uses transaction-related credentials to derive UWB communication session keys, wherein data exchanged between the communication device (100) and the external communication device during the ranging operations are protected by means of encryption using a UWB communication session key.

9. The method (200) of claim 8, wherein the processing unit further performs a UWB ranging session key agreement process with the external communication device through the secure communication channel.

10. The method (200) of claim 8 or 9, wherein carrying out (206) the transaction includes performing a mutual authentication process with the external communication device.

11. A computer program comprising executable instructions which, when executed by a communication device, carry out the method (200) of any one of claims 8 to 10.

## Patentansprüche

1. Kommunikationsvorrichtung (100), umfassend:
eine Ultrabreitband-(UWB-)Kommunikationseinheit (102), die dazu ausgelegt ist, eine UWB-Entfernungsmessungssitzung mit einer externen Kommunikationsvorrichtung auszuführen, wobei das Ausführen der UWB-Entfernungsmessungssitzung das Ausführen einer Vielzahl von Entfernungsmessungsoperationen mit der externen Kommunikationsvorrichtung umfasst;
eine weitere Kommunikationseinheit (104), die dazu ausgelegt ist, einen sicheren Kommunikationskanal mit der externen Kommunikationsvorrichtung einzurichten;
eine Verarbeitungseinheit (106), die dazu ausgelegt ist, eine Transaktion über die weitere Kommunikationseinheit in Abhängigkeit von einem Ergebnis der **UWB-**Entfernungsmessungssitzung durchzuführen, wobei das Ausführen der UWB-Entfernungsmessungssitzung das Ausführen einer Vielzahl von Entfernungsmessungsoperationen mit der externen Kommunikationsvorrichtung umfasst, um zu verifizieren, ob die Kommunikationsvorrichtung von einem Benutzer getragen wird, der sich der externen Kommunikationsvorrichtung korrekt annähert;
wobei die Verarbeitungseinheit (106) ferner dazu ausgelegt ist, die Transaktion innerhalb des sicheren Kommunikationskanals zu kapseln, indem ein Befehl und eine Antwort der Transaktion in den sicheren Kommunikationskanal eingebettet werden;
wobei die Kommunikationsvorrichtung (100) dazu ausgelegt ist, transaktionsbezogene Zugangsdaten zu verwenden, um UWB-Kommunikationssitzungsschlüssel abzuleiten, wobei Daten, die während der Entfernungsmessungsoperationen zwischen der Kommunikationsvorrichtung (100) und der externen Kommunikationsvorrichtung ausgetauscht werden, mittels Verschlüsselung unter Verwendung eines UWB-Kommunikationssitzungsschlüssels geschützt werden.

2. Vorrichtung (100) nach Anspruch 1, wobei die Verarbeitungseinheit (106) ferner dazu ausgelegt ist, einen UWB-Entfernungsmessungs-Sitzungsschlüsselvereinbarungsprozess mit der externen Kommunikationsvorrichtung über den sicheren Kommunikationskanal durchzuführen.

3. Vorrichtung (100) nach einem der vorhergehenden Ansprüche, wobei die weitere Kommunikationseinheit (104) eine Bluetooth Low Energy-(BLE-)Kommunikationseinheit oder eine Wi-Fi-Kommunikationseinheit ist.

4. Vorrichtung (100) nach einem der vorhergehenden Ansprüche, wobei das Durchführen der Transaktion das Durchführen eines gegenseitigen Authentifizierungsprozesses mit der externen Kommunikationsvorrichtung umfasst.

5. Vorrichtung (100) nach Anspruch 4, wobei der gegenseitige Authentifizierungsprozess einen vorbestimmten kryptografischen Schlüssel verwendet.

6. Vorrichtung (100) nach Anspruch 5, wobei der vorbestimmte kryptografische Schlüssel ein Advanced Encryption Standard-(AES-)Hauptschlüssel ist, der vor dem Durchführen des gegenseitigen Authentifizierungsprozesses mit der externen Kommunikationsvorrichtung geteilt worden ist.

7. Vorrichtung (100) nach einem der vorhergehenden Ansprüche, wobei das Durchführen der Transaktion umfasst, die Transaktion nur dann abzuschließen, wenn das Ergebnis der UWB-Entfernungsmessungssitzung ein erwartetes Ergebnis erfüllt.

8. Verfahren (200) zum Betreiben einer Kommunikationsvorrichtung, umfassend:
Ausführen (202), durch eine Ultrabreitband-(UWB-) Kommunikationseinheit der Kommunikationsvorrichtung, einer UWB-Entfernungsmessungssitzung mit einer externen Kommunikationsvorrichtung, wobei das Ausführen der UWB-Entfernungsmessungssitzung das Ausführen einer Vielzahl von Entfernungsmessungsoperationen mit der externen Kommunikationsvorrichtung umfasst;
Einrichten (204), durch eine weitere Kommunikationseinheit der Kommunikationsvorrichtung, eines sicheren Kommunikationskanals mit der externen Kommunikationsvorrichtung;
Durchführen (206), durch eine Verarbeitungseinheit der Kommunikationsvorrichtung, einer Transaktion über die weitere Kommunikationseinheit in Abhängigkeit von einem Ergebnis der UWB-Entfernungsmessungssitzung, wobei das Ausführen der UWB-Entfernungsmessungssitzung das Ausführen einer Vielzahl von Entfernungsmessungsoperationen mit der externen Kommunikationsvorrichtung umfasst, um zu verifizieren, ob die Kommunikationsvorrichtung von einem Benutzer getragen wird, der sich der externen Kommunikationsvorrichtung korrekt annähert;
wobei die Transaktion innerhalb des sicheren Kommunikationskanals gekapselt wird, indem ein Befehl und eine Antwort der Transaktion in den sicheren Kommunikationskanal eingebettet werden;
wobei die Kommunikationsvorrichtung (100) die transaktionsbezogenen Zugangsdaten verwendet, um UWB-Kommunikationssitzungsschlüssel abzuleiten, wobei Daten, die während der Entfernungsmessungsoperationen zwischen der Kommunikationsvorrichtung (100) und der externen Kommunikationsvorrichtung ausgetauscht werden, mittels Verschlüsselung unter Verwendung eines UWB-Kommunikationssitzungsschlüssels geschützt werden.

9. Verfahren (200) nach Anspruch 8, wobei die Verarbeitungseinheit ferner einen UWB-Entfernungsmessungs-Sitzungsschlüsselvereinbarungsprozess mit der externen Kommunikationsvorrichtung über den sicheren Kommunikationskanal durchführt.

10. Verfahren (200) nach Anspruch 8 oder 9, wobei das Durchführen (206) der Transaktion das Durchführen eines gegenseitigen Authentifizierungsprozesses mit der externen Kommunikationsvorrichtung umfasst.

11. Computerprogramm, das ausführbare Anweisungen umfasst, die bei Ausführung durch eine Kommunikationsvorrichtung das Verfahren (200) nach einem der Ansprüche 8 bis 10 durchführen.

## Revendications

1. Dispositif de communication (100), comprenant :
une unité de communication à ultra-large bande, Ultra-WideBand UWB (102) configurée pour exécuter une session de télémétrie UWB avec un dispositif de communication externe, dans lequel le fait d'exécuter la session de télémétrie UWB inclut le fait d'exécuter une pluralité d'opérations de télémétrie avec le dispositif de communication externe ;
une unité de communication supplémentaire (104) configurée pour établir un canal de communication sécurisé avec le dispositif de communication externe ;
une unité de traitement (106) configurée pour effectuer une transaction par le biais de l'unité de communication supplémentaire en fonction d'un résultat de la session de télémétrie UWB, dans lequel le fait d'exécuter la session de télémétrie UWB inclut le fait d'exécuter une pluralité d'opérations de télémétrie avec le dispositif de communication externe pour vérifier si le dispositif de communication est porté par un utilisateur qui se rapproche correctement du dispositif de communication externe ;
dans lequel l'unité de traitement (106) est en outre configurée pour envelopper ladite transaction à l'intérieur du canal de communication sécurisé en incorporant une commande et une réponse de ladite transaction à l'intérieur du canal de communication sécurisé ;
dans lequel le dispositif de communication (100) est configuré pour utiliser des justificatifs connexes à la transaction, pour dériver des clefs de sessions de communication UWB, dans lequel des données échangées entre le dispositif de communication (100) et le dispositif de communication externe durant les opérations de télémétrie sont protégées au moyen de chiffrement en utilisant une clef de session de communication UWB.

2. Dispositif (100) de la revendication 1, dans lequel l'unité de traitement (106) est en outre configurée pour réaliser un processus d'accord de clef de session de télémétrie UWB avec le dispositif de communication externe par le biais du canal de communication sécurisé.

3. Dispositif (100) d'une quelconque revendication précédente, dans lequel l'unité de communication supplémentaire (104) est une unité de communication Bluetooth basse énergie, Bluetooth Low Energy BLE, ou une unité de communication Wi-Fi.

4. Dispositif (100) d'une quelconque revendication précédente, dans lequel le fait d'effectuer la transaction inclut le fait de réaliser un processus d'authentification mutuelle avec le dispositif de communication externe.

5. Dispositif (100) de la revendication 4, dans lequel le processus d'authentification mutuelle utilise une clef cryptographique prédéterminée.

6. Dispositif (100) de la revendication 5, dans lequel la clef cryptographique prédéterminée est une clef maîtresse de norme de chiffrement avancé, Advanced Encryption Standard AES, qui a été partagée avec le dispositif de communication externe avant que le processus d'authentification mutuelle ne soit réalisé.

7. Dispositif (100) d'une quelconque revendication précédente, dans lequel le fait d'effectuer la transaction inclut le fait de conclure la transaction seulement si le résultat de la session de télémétrie UWB satisfait à un résultat escompté.

8. Procédé (200) de fonctionnement d'un dispositif de communication, comprenant les faits :
d'exécuter (202), par une unité de communication à ultra-large bande, Ultra-WideBand UWB du dispositif de communication, une session de télémétrie UWB avec un dispositif de communication externe, dans lequel le fait d'exécuter la session de télémétrie UWB inclut le fait d'exécuter une pluralité d'opérations de télémétrie avec le dispositif de communication externe ;
d'établir (204), par une unité de communication supplémentaire du dispositif de communication, un canal de communication sécurisé avec le dispositif de communication externe ;
d'effectuer (206), par une unité de traitement du dispositif de communication, une transaction par le biais de l'unité de communication supplémentaire en fonction d'un résultat de la session de télémétrie UWB, dans lequel le fait d'exécuter la session de télémétrie UWB inclut le fait d'exécuter une pluralité d'opérations de télémétrie avec le dispositif de communication externe pour vérifier si le dispositif de communication est porté par un utilisateur qui se rapproche correctement du dispositif de communication externe ;
dans lequel ladite transaction est enveloppée à l'intérieur du canal de communication sécurisé en incorporant une commande et une réponse de ladite transaction à l'intérieur du canal de communication sécurisé ;
dans lequel le dispositif de communication (100) utilise des justificatifs connexes à la transaction, pour dériver des clefs de sessions de communication UWB, dans lequel des données échangées entre le dispositif de communication (100) et le dispositif de communication externe durant les opérations de télémétrie sont protégées au moyen de chiffrement en utilisant une clef de session de communication UWB.

9. Procédé (200) de la revendication 8, dans lequel l'unité de traitement réalise en outre un processus d'accord de clef de session de télémétrie UWB avec le dispositif de communication externe par le biais du canal de communication sécurisé.

10. Procédé (200) de la revendication 8 ou 9, dans lequel le fait d'effectuer (206) la transaction inclut le fait de réaliser un processus d'authentification mutuelle avec le dispositif de communication externe.

11. Programme d'ordinateur comprenant des instructions exécutables qui, lorsqu'elles sont exécutées par un dispositif de communication, effectuent le procédé (200) de l'une quelconque des revendications 8 à 10.
